# EUROPEAN PATENT SPECIFICATION

(11) **EP 4 048 726 B1**
(45) Date of publication and mention of the grant of the patent: **24.06.2026**
(21) Application number: 20799899.8
(22) Date of filing: 08.10.2020
(51) Int. Cl.: C08J 11/04, C08G 63/78, C08G 63/91

(54) **COPOLYESTERS PRODUCED FROM RECYCLED COPOLYESTERS**
AUS RECYCELTEN COPOLYESTERN HERGESTELLTE COPOLYESTER
COPOLYESTERS PRODUITS À PARTIR DE COPOLYESTERS RECYCLÉS

(30) Priority: 25.10.2019 US 201962925887 P; 25.10.2019 US 201962925882 P
(43) Date of publication of application: 31.08.2022
(73) Proprietor: Eastman Chemical Company, Kingsport, TN 37660 (US)
(72) Inventor: PETERS, Mark Allen, Jonesbrough, TN 37659 (US); HORTON, Jonathan Michael, Kingsport, TN 37660 (US); KEEVER, Travis Wynn, Lane Gray, TN 37615 (US); EKART, Michael Paul, Kingsport, TN 37660 (US); EKART, Erin G., Gray, TN 37615 (US)
(74) Representative: Ricker, Mathias
(86) International application number: PCT/US2020/054684
(87) International publication number: WO 2021/080777

(56) References cited:
- JP-A- 2002 338 671
- US-A1- 2013 041 053
- US-A1- 2015 057 400

## Description

### FIELD OF THE INVENTION

The disclosure generally relates to the field of polymer chemistry. It particularly relates to a process for making copolyesters from recycled polyesters and copolyesters.

### BACKGROUND OF THE INVENTION

Polyesters are often viewed as the world's most purchased and diversely utilized class of polymers, with published world production volumes (including recycling) recently reported to be well in excess of 75 million tons. This level of commercial success is likely attributable in part to polyesters' attractive combination of relative cost, manufacturability, and competitive performance attributes. Polyester's physical, chemical and thermal properties make them useful and desirable for a wide variety of end-use applications. Polyethylene terephthalate (PET) is one of the most popular types of polyester for many end-uses. With the continuing commercial success of polyesters generally and PET specifically has come efforts to recover scrap materials from post-consumer and post-industrial and other sources and re-use those materials as an alternative to basic disposal methods such as landfills.

In some known recycle methods, recycled PET is blended with virgin materials. This approach has been used, for example, to prepare blends of virgin poly(butylene terephthalate) ("PBT") with recycled PET to yield a PBT-based product with recycle content (see, for example, U.S. Patent Application Publication No. 2009/0275698). Such blends, however, can be generally immiscible and produce a material that is relatively opaque. Blending, therefore, is not a uniformly satisfactory method to provide commercially acceptable end products with recycle content.

In other recycle methods, polyesters are depolymerized to form the monomer units originally used in its manufacture. One commercially utilized method for polyester depolymerization is methanolysis. In methanolysis, the polyester is reacted with methanol to produce a depolymerized polyester mixture comprising polyester oligomers, dimethyl terephthalate ("DMT"), and ethylene glycol ("EG"). Other monomers such as, for example, 1,4-cyclohexanedimethanol ("CHDM") and diethylene glycol may also be present depending on the composition of the polyester in the methanolysis feed stream. Some representative methods for the methanolysis of PET are described in U.S. Pat. Nos. 3,037,050; 3,321,510; 3,776,945; 5,051,528; 5,298,530; 5,414,022; 5,432,203; 5,576,456 and 6,262,294, A representative methanolysis process is also illustrated in U.S. Pat. No. 5,298,530, The '530 patent describes a process for the recovery of ethylene glycol and dimethyl terephthalate from scrap polyester. The process includes the steps of dissolving scrap polyester in oligomers of ethylene glycol and terephthalic acid or dimethyl terephthalate and passing super-heated methanol through this mixture. The oligomers can comprise any low molecular weight polyester polymer of the same composition as that of the scrap material being employed as the starting component such that the scrap polymer will dissolve in the low molecular weight oligomer. The dimethyl terephthalate and the ethylene glycol are recovered from the methanol vapor stream that issues from depolymerization reactor.

Another approach to depolymerize polyesters is glycolysis, in which the polyester is reacted with a glycol such as ethylene glycol or CHDM to produce a depolymerized polyester mixture. U. S. Pat. No. 4,259,478 thus discloses a process comprising heating a polyester in the presence of 1,4-cyclohexanedimethanol to glycolize the polymer, distilling out ethylene glycol from the glycolysis mixture, and polycondensing the glycolysis mixture to form a copolyester of which at least a portion of ethylene glycol units are replaced by 1,4-cyclohexanedimethanol units. Similarly, U.S. Pat. No. 5,635,584 discloses postconsumer or scrap polyester reacted with glycol to produce a monomer or low molecular weight oligomer by depolymerization of the polyester. The monomer or oligomer, as the case may be, is then purified using one or more steps including filtration, distillation, crystallization, and optionally adsorbent treatment or evaporation. The monomer or oligomer thus produced is particularly suitable as a raw material for acid or ester based polyester production of packaging grade polyester materials. Because the process includes purification steps, the specifications for the recycled polyester material need not be strict.

Another method of reusing scrap polyester is to introduce the scrap into a polymerization process. U.S. Pat. No. 5,559,159 thus discloses previously used poly(ethylene terephthalate) polyester materials and copolymers thereof, and in particular postconsumer polyester materials, depolymerized and repolymerized to produce bottle grade polymer containing up to 75% of the previously used material. The process involves the solubilization and depolymerization of the previously used polyester material in a transesterification and/or polymerization mixture containing dimethylterephthalate, ethylene glycol and transesterification products thereof. U.S. Pat. No. 5,945,460 discloses a process for producing polyester articles, which generates little or no polyester waste. The process provides esterification or transesterification of one or more dicarboxylic acids or their dialkyl esters, polycondensation to produce a high molecular weight polyester, and molding or shaping of the polyester to produce the desired product. Scrap produced during the molding process is recycled back to the esterification or transesterification or polycondensation portion of the process. Optionally, the scrap may also be recycled to intermediate steps prior to the molding operation. U.S. Pat. No. 7,297,721 discloses a process for the preparation of high molecular weight crystalline PET using up to 50% of post consumer recycled PET flakes along with purified terephthalic acid (PTA), isophthalic acid and ethylene glycol as a virgin raw material, in the presence of a combination of catalysts and additives to obtain an intermediate prepolymer heel having a low degree of polymerization, further subjecting to autoclaving to yield an amorphous melt, followed by solid state polymerization.

Further prior art is known from US2015/057400.

A continuing need nonetheless exists for alternative and/or improved processes for utilizing recycled copolyesters to produce high quality copolyesters. This demand for recycle content has created a need to develop new methods and processes for capturing and converting existing plastic waste streams into new plastic articles.

The present disclosure addresses this need as well as others, which will become apparent from the following description and the appended claims.

### SUMMARY OF THE INVENTION

The invention is defined by the appended claims.

In one aspect, the present disclosure provides a process for preparing linear, high molecular weight copolyesters from either (A) recycled polyesters and/or recycled copolyesters, the acid component of which consists of at least 70 mole percent terephthalic acid and the diol component of which consists of at least 70 mole percent ethylene glycol or (B) recycled copolyesters, the acid component of which consists of at least 70 mole percent terephthalic acid and the diol component of which consists of at least 70 mole percent of a mixture of ethylene glycol, 1,4-cyclohexanedimethanol, and diethylene glycol in a mole ratio of from 96:3:1 to 20:68:12, or (C) recycled copolyesters, the acid component of which consists of at least 70 mole percent terephthalic acid and the diol component of which consists of at least 70 mole percent of a mixture of 2 or more glycols comprising ethylene glycol (EG), diethylene glycol (DEG), 1,4-cyclohexanedimethanol (CHDM), neopentyl glycol (NPG), or 2,2,4,4-tetramethyl-1,3-cyclobutanediol (TMCD) ), butanediol, and isosorbide or (D) recycled copolyesters, the acid component of which consists of at least 70 mole percent terephthalic acid and the diol component of which consists of at least 70 mole percent of a mixture of ethylene glycol, 1,4-cyclohexanedimethanol in a mole ratio of from 3.5:96.5 to 100:0.

The process provides a fast polymerization rate and the polymers so produced can be used in the manufacture of plastics, fibers, films, shrinkable films, sheet, molded articles and other shaped objects having good physical properties. In one aspect, the disclosed process describes a method for converting post-industrial and post-consumer waste products into high quality copolyester resins capable of being used to make new plastics with a high level of recycle content. In another aspect, the disclosed process describes a method for converting post-industrial and post-consumer waste products into resins capable of being used to make high quality shrinkable films.

One aspect of the present disclosure is a process for producing a copolyester from recycled copolyesters comprising:
(a) introducing recycled PET, recycled PETG, recycled PCT, recycled PCTG, recycled PCTA, recycled PCTM and/or recycled PETM; terephthalic acid (TPA); and ethylene glycol (EG) into a paste tank to form a slurry that is stirred and heated at temperatures up to 150°C;
(b) passing the paste tank slurry to a first reaction zone;
(c) introducing at least one additional glycol comprising 1,4-cyclohexanedimethanol (CHDM), neopentyl glycol (NPG), or 2,2,4,4-tetramethyl-1,3-cyclobutanediol (TMCD), and optionally adding additional recycled PET, recycled PETG, recycled PCTM and/or recycled PETM; terephthalic acid (TPA); and ethylene glycol (EG) at an EG:TPA molar ratio of 1:1 to 4:1 into the first reaction zone, and optionally a catalyst;
(d) reacting TPA with EG and the at least one additional glycol (such as CHDM) in the first reaction zone at a melt temperature of at least 200ºC and a pressure of up to 40 psi to form a first esterification product comprising oligomers and unreacted TPA, EG, and the additional glycol (such as CHDM);
(e) passing the first esterification product to a second reaction zone;
(f) esterifying the unreacted TPA, EG, and the additional glycol (such as CHDM) in the first esterification product in the second reaction zone at a melt temperature of at least 200ºC and a pressure of up to 20 psi to form a second esterification product comprising copolyester oligomers;
(g) passing the second esterification product to a third reaction zone;
(h) polycondensing the second esterification product in the third reaction zone to form a prepolymerization product comprising copolyesters, optionally in the presence of a polycondensation catalyst;
(i) passing the prepolymerization product to one or more finishing zones.

One aspect of the present disclosure, is the process of any one of the previous aspects, wherein the process further comprises adding a catalyst or additive via the addition of recycled polyester in which the catalyst or additive is a component of the recycled polyester; such as Sb, Ti, Co, Mn, Li, Al, P. One aspect of the present disclosure is a method of introducing or establishing recycle content in a polyester produced by the process of the previous aspects comprising:
a. obtaining a recycled monomer allocation or credit for at least one recycled monomer comprising TPA, EG, DMT, CHDM, NPG or DEG;
b. converting the recycled monomers in a synthetic process to make a polyester;
c. designating at least a portion of the polyester as corresponding to at least a portion of the recycled monomer allocation or credit; and
d. optionally, offering to sell or selling the polyester as containing or obtained with recycled monomer content corresponding with such designation.

One aspect of the present disclosure is any one of the preceding aspects, wherein the amount of recycled polyester added to the process is from 5-100% based on the amount of TPA required.

### BRIEF DESCRIPTION OF THE DRAWING

The figure 1 is a flow diagram of various processes according to the present disclosure.
Figure 2. Sb catalyst levels in the final material as a function of rPET starting material loading level.

### DETAILED DESCRIPTION OF THE INVENTION

It has been surprisingly discovered that it is possible to produce high quality copolyester resins from recycled copolyesters and/or recycled polyesters.

In one embodiment, the recycled polyester and/or copolyester can be recovered as manufacturing scrap or industrial waste or post-consumer recycled (PCR) waste. Typically, PCR or recycled waste are articles made from polyesters or copolyesters that have been used and discarded. Today, PET is recycled by mechanical methods and incorporated into new PET bottles and other PET articles as blends with virgin material.

The copolyesters with recycled content and the copolyesters made from recycled content comprise dicarboxylic acid monomer residues, diol or glycol monomer residues, and repeating units. Thus, the term "monomer residue", as used herein, means a residue of a dicarboxylic acid, a diol or glycol, or a hydroxycarboxylic acid. A "repeating unit", as used herein, means an organic structure having 2 monomer residues bonded through a carbonyloxy group. The copolyesters of the present disclosure contain substantially equal molar proportions of acid residues (100 mole %) and glycol residues (100 mole %) which react in substantially equal proportions such that the total moles of repeating units is equal to 100 mole %. The mole percentages provided in the present disclosure, therefore, may be based on the total moles of acid residues, the total moles of glycol residues, or the total moles of repeating units. For example, a copolyester containing 30 mole % of a monomer, which may be a dicarboxylic acid, a glycol, or hydroxycarboxylic acid, based on the total repeating units, means that the copolyester contains 30 mole % monomer out of a total of 100 mole % repeating units. Thus, there are 30 moles of monomer residues among every 100 moles of repeating units. Similarly, a copolyester containing 30 mole % of a dicarboxylic acid monomer, based on the total acid residues, means the polyester contains 30 mole % dicarboxylic acid monomer out of a total of 100 mole % acid residues. Thus, in this latter case, there are 30 moles of dicarboxylic acid monomer residues among every 100 moles of acid residues.

The term "polyester", as used herein, encompasses both "homopolymers" and "homopolyesters" and "copolyesters" and means a synthetic polymer prepared by the polycondensation of at least one diacid component, comprising one or more difunctional carboxylic acids, with a least one glycol component, comprising one or more, difunctional hydroxyl compounds. The term "copolyester," as used herein, is intended to mean a polyester formed from the polycondensation of at least 3 different monomers, e.g., a dicarboxylic acid with 2 or more glycols or, in another example, a diol with 2 or more different dicarboxylic acids. Typically, the difunctional carboxylic acid is a dicarboxylic acid and the difunctional hydroxyl compound is a dihydric alcohol such as, for example glycols and diols. Alternatively, the difunctional carboxylic acid may be a hydroxy carboxylic acid such as, for example, p-hydroxybenzoic acid, and the difunctional hydroxyl compound may be an aromatic nucleus bearing 2 hydroxy substituents such as, for example, hydroquinone. The term "residue", as used herein, means any organic structure incorporated into the polymer through a polycondensation reaction involving the corresponding monomer. The dicarboxylic acid residue may be derived from a dicarboxylic acid monomer or its associated acid halides, esters, salts, anhydrides, or mixtures thereof. For example, in one embodiment, for the copolyesters of the present disclosure, the diacid component is supplied as terephthalic acid or isophthalic acid.

The recycled polyesters and/or copolyesters can be repolymerized into copolyesters using any polycondensation reaction conditions known in the art. They may be made by continuous, semi-continuous, and batch modes of operation and may utilize a variety of reactor types. Examples of suitable reactor types include, but are not limited to, stirred tank, continuous stirred tank, slurry, tubular, wiped-film, falling film, or extrusion reactors. The term "continuous" as used herein means a process wherein the reactants are introduced, and the products are withdrawn simultaneously in an uninterrupted manner. The process is operated advantageously as a continuous process for economic reasons and to produce superior coloration of the polymer as the copolyester may deteriorate in appearance if allowed to reside in a reactor at an elevated temperature for too long a duration.

The copolyesters of the present disclosure are prepared by procedures known to persons skilled in the art. The reaction of the diol component and the dicarboxylic acid component may be carried out using conventional copolyester polymerization conditions. For example, when preparing the copolyester by means of an ester interchange reaction, e.g., from the ester form of the dicarboxylic acid components, the reaction process may comprise two steps. In the first step, the diol component and the dicarboxylic acid component, such as, for example, terephthalic acid, are reacted at elevated temperatures, about 150°C to about 250°C for about 0.5 to about 8 hours at pressures ranging from about 0.0 kPa gauge to about 414 kPa gauge (60 pounds per square inch, "psig"). The temperature for the ester interchange reaction ranges from about 180°C to about 230°C for about 1 to about 4 hours while the pressure ranges from about 103 kPa gauge (15 psig) to about 276 kPa gauge (40 psig). Thereafter, the reaction product is heated under higher temperatures and under reduced pressure to form the copolyester with the elimination of diol, which is readily volatilized under these conditions and removed from the system.

This second step, or polycondensation step, is continued under higher vacuum and a temperature which generally ranges from about 230°C to about 350°C, or from about 250°C to about 310°C, or from about 260°C to about 290°C for about 0.1 to about 6 hours, or for about 0.2 to about 2 hours, until a polymer having the desired degree of polymerization, as determined by inherent viscosity, is obtained. The polycondensation step may be conducted under reduced pressure which ranges from about 53 kPa (400 torr) to about 0.013 kPa (0.1 torr). Stirring or appropriate conditions are used in both stages to ensure adequate heat transfer and surface renewal of the reaction mixture, and removal of water, excess glycol, or alcohols to facilitate reaction and polymerization. The reaction rates of both stages are increased by appropriate catalysts such as, for example, alkoxy titanium compounds, alkali metal hydroxides and alcoholates, salts of organic carboxylic acids, alkyl tin compounds, metal oxides, and the like. A three-stage manufacturing procedure, similar to that described in U.S. Patent No. 5,290,631, may also be used, particularly when a mixed monomer feed of acids and esters is employed.

To ensure that the reaction of the diol component and dicarboxylic acid component by an ester interchange reaction is driven to completion, it is sometimes desirable to employ about 1.05 to about 2.5 moles of diol component to one mole dicarboxylic acid component followed by removal of the excess glycol in a subsequent step. Persons of skill in the art will understand, however, that the ratio of diol component to dicarboxylic acid component is generally determined by the design of the reactor in which the reaction process occurs.

In the preparation of a copolyester by direct esterification, e.g., from the acid form of the dicarboxylic acid component, copolyesters are produced by reacting the dicarboxylic acid or a mixture of dicarboxylic acids with the glycol component or a mixture of glycol components. The reaction is conducted at a pressure of from about 7 kPa gauge (1 psig) to about 1379 kPa gauge (200 psig), or from less than 689 kPa (100 psig) to produce a low molecular weight, linear or branched copolyester product having an average degree of polymerization of from about 1.4 to about 10. The temperatures employed during the direct esterification reaction are from about 180°C to about 280°C, or from about 220°C to about 270°C. This low molecular weight polymer may then be polymerized by a polycondensation reaction.

In some embodiments, suitable glycols include but are not limited to, ethylene glycol, diethylene glycol, triethylene glycol, propylene glycol, polyethylene glycol, 1,2-propanediol, 1,3- propanediol, neopentyl glycol, 1,4-butanediol, 1,5-pentanediol, 1,6- hexanediol, p-xylene glycol, 1,4-cyclohexanedimethanol, 2,2,4,4-tetramethylcyclobutane-1 ,3-diol, polytetramethylene glycol, isosorbide or mixtures thereof.

In some embodiments, copolyesters including the following diacids are suitable for use in the repolymerization process or in the polymerization process to make new copolyesters with recycle content: terephthalic acid, isophthalic acid, trimellitic anhydride (or acid), naphthalene dicarboxylic acid, and 1,4-cyclohexanedicarboxylic acid.

In some embodiments, copolyesters including the following glycols are suitable for use in the repolymerization process or in the polymerization process to make new copolyester with recycle content: ethylene glycol, diethylene glycol, triethylene glycol, propylene glycol, polyethylene glycol, 1,2-propanediol, 1,3- propanediol, neopentyl glycol, 1,4-butanediol, 1,5-pentanediol, 1,6- hexanediol, p-xylene glycol, 1,4-cyclohexanedimethanol, 2,2,4,4-tetramethylcyclobutane-1 ,3-diol, polytetramethylene glycol, isosorbide or mixtures thereof.

In one embodiment, recycled waste materials comprising terephthalate polyesters and/or copolyesters can be used in the repolymerization process. In one embodiment, any conventionally prepared terephthalate polyesters or copolyesters can be used in the repolymerization process. In one embodiment, suitable terephthalate polyesters and/or copolyesters include poly(ethylene terephthalate) (PET), (polyethylene terephthalate, glycol-modified (PETG), poly(cyclohexylene dimethylene terephtalate), glycol-modified (PCTG), poly(cyclohexylene dimethylene terephtalate), acid (PCTA), poly(butylene terephthalate) (PBT), poly(propylene terephthalate) (PPT), polytrimethylene terephthalate (PTT), polycyclohexane dimethanol terephthalate (PCT), Polyethylene naphthalate (PEN), poly(ethylene terephthalate), TMCD modified (PETM), poly(cyclohexylene dimethylene terephtalate), TMCD modified (PCTM), and mixtures thereof. In one embodiment, the terephthalate polyester is poly(ethylene terephthalate) (PET). In one embodiment, the copolyester is PETG. In one embodiment, the copolyester is PCT. In one embodiment, the copolyester is PCTG. In one embodiment, the copolyester is PCTA. In one embodiment, the copolyester is PCTM. In one embodiment, the copolyester is PETM.

In one embodiment, mixtures of terephthalate polyesters and copolyesters are repolymerized together in combination. In one embodiment, PET and PETG are repolymerized together in combination. In one embodiment, PET and PETM are repolymerized together in combination. In one embodiment, PET and PCT are repolymerized together in combination. In one embodiment, PET and PCTA are repolymerized together in combination. In one embodiment, PET and PCTG are repolymerized together in combination. In one embodiment, PET and PCTM are repolymerized together in combination. In one embodiment, PET and PETG and PETM are repolymerized together in combination. In one embodiment, PET and PETG and PCTM are repolymerized together in combination. In one embodiment, PET, PETG, PCTM and PETM are repolymerized together in combination.

In one embodiment, the copolyesters suitable for use in the present disclosure are prepared from monomers such as, for example, dimethyl terephthalate (DMT), terephthalic acid (TPA), isophthalic acid (IPA), 1,4-cyclohexanedicarboxylic acid (CHDA), ethylene glycol (EG), diethylene glycol (DEG), neopentyl glycol (NPG),1,4-cyclohexanedimethanol (CHDM), and 2,2,4,4-tetramethyl-1,3-cyclobutanediol (TMCD).

One embodiment, of the present disclosure, pertains to a process for the preparation of copolyesters having a high level of recycled content obtained by repolymerizing scrap or post-consumer polyesters including terephthalate-containing polyesters (e.g., PET) and/or copolyesters (e.g., PETG) with water or an alcohol or glycol, and using the recycled monomers to prepare copolyesters containing a high mole percentage of recycled monomer residues.

In one aspect of the present disclosure, high molecular weight copolyesters that contain glycol and diacid components, wherein the glycol components comprise ethylene glycol, diethylene glycol, triethylene glycol, propylene glycol, polyethylene glycol, 1,2-propanediol, 1,3- propanediol, neopentyl glycol, 1,4-butanediol, 1,5-pentanediol, dimethyl 1,4-cyclohexanedicarboxylate, trans-dimethyl 1,4-cyclohexanedicarboxylate, 1,6-hexanediol, p-xylene glycol, 1,4-cyclohexanedimethanol, 2,2,4,4-tetramethylcyclobutane-1 ,3-diol, polytetramethylene glycol, adipic acid, isosorbide and mixtures thereof and the diacid components comprise dimethyl terephthalate, terephthalic acid, isophthalic acid (IPA), trimellitic anhydride (or trimellitic acid), salts of 5-(sulfo)isophthalic acid (SIPA), naphthalene dicarboxylic acid, 1,4-cyclohexanedicarboxylic acid, and mixtures thereof; when a depolymerization aid or solvent such as water, an alcohol or excess glycol is introduced under conditions where the reversible ester exchange reaction can occur, then depolymerization by hydrolysis, alcoholysis or glycolysis will occur, reducing the chain length (molecular weight) of the polymer. With a sufficient quantity of the solvent, the reaction will proceed to a point where the mixture will consist primarily of monomers, glycols and the diesters of the acid component. In one aspect the glycols of the mixture comprise ethylene glycol, diethylene glycol, triethylene glycol, propylene glycol, polyethylene glycol, 1,2-propanediol, 1,3- propanediol, neopentyl glycol, 1,4-butanediol, 1,5-pentanediol, dimethyl 1,4-cyclohexanedicarboxylate, trans-dimethyl 1,4-cyclohexanedicarboxylate, 1,6- hexanediol, p-xylene glycol, 1,4-cyclohexanedimethanol, 2,2,4,4-tetramethylcyclobutane-1 ,3-diol, polytetramethylene glycol, adipic acid, isosorbide and mixtures thereof. In one embodiment, the glycols of the mixture comprise ethylene glycol, 1,2-propanediol, 1,3- propanediol, neopentyl glycol, 1,4-butanediol, 1,5-pentanediol, 1,4-cyclohexanedimethanol, 2,2,4,4-tetramethylcyclobutane-1 ,3-diol and mixtures thereof. In one embodiment, the glycols of the mixture comprise ethylene glycol, neopentyl glycol, 1,4-cyclohexanedimethanol, 2,2,4,4-tetramethylcyclobutane-1 ,3-diol and mixtures thereof. These recycled monomers can then be used to prepare copolyesters containing a high mole percentage of recycled monomer residues.

This invention relates to a process for utilizing recycled polyethylene terephthalate (PET) and recycled glycol-modified polyethylene terephthalate copolyesters (PETG), especially post-consumer waste materials in the production of linear, high molecular weight copolyesters. There is a growing demand for using higher amounts of recycled material in plastic articles. This demand for recycle content has created a need to develop new methods and processes for capturing and converting existing plastic waste streams into new plastic articles. The recycling of PETG waste materials is of particular interest. In recent years, legislation has attempted to segregate recycled glycol-modified PET (PETG) waste product from recycled polyethylene terephthalate (PET) waste products that carry the resin identification code (RIC) 1 because of the issues experienced during the processing of these combined waste streams. Additionally, there is a large volume of PETG that is not recycled today that could be reclaimed and converted into new plastic articles. In particular, shrinkable films made with PETG contain inks and other contaminants that must be removed from recycling streams in order to produce high quality, clear recycled PET (rPET). Additionally, medical packaging is made from a large proportion of PETG and this material does not currently have a recycling stream. The present invention provides a process for utilizing recycled PETG and recycled PETG in combination with PET as a reactive intermediate in the production of copolyesters useful in the manufacture of such extruded and injection molded products as shrinkable films, fibers, durable goods, and other shaped articles and objects.

There exists today a very well-defined and large scale, mechanical recycling process whereby polyethylene terephthalate (PET) articles are reclaimed and converted into semi-crystalline, recycled PET (rPET) and further incorporated into new plastic articles. Glycol-modification of PET with other glycols like 1,4-cyclohexane diol, diethylene glycol, butanediol, or neopentyl glycol is a very common method to improve clarity, improve toughness, and reduce the crystallinity of PET. These glycol-modified materials are typically referred to as glycol-modified PET or PETG. Even though the chemical compositions of these materials are very similar to PET, the modification with glycols other than ethylene glycol creates materials that are difficult to recycle in the PET recycling process. New methods must be created to recover and recycle these PETG materials.

The process described in this disclosure uses recycled PETG as a raw material feed to make a variety of new copolyester resins. In this process, recycled PETG (rPETG) is introduced with ethylene glycol and terephthalic acid as a paste to feed the transesterification reactor at the beginning of the manufacturing process to produce new copolyesters. During the process, added glycols break down rPETG to its original acid and glycol residue starting materials, new glycols and acids are added, and the mixture is then esterified and polymerized to produce new copolyesters. This process has the advantage of using recycled PETG as a feedstock without the need to further purify the acids and glycols that are created. Additionally, this process is advantageous because it provides a method for using rPETG that currently does not have a mechanical recycling stream and thus would be placed in a landfill.

In addition, the rPETG (or rPCTG, or rPCTM, or rPETM, or rPCTA, or rPCTG, or rPCT) contains 2 or more higher value monomers that are not present in rPET such as CHDM, TMCD, DEG, and NPG. The PETG product that is produced from this process performs the same as virgin PETG and can be used in the exact same applications without sacrificing any performance by addition of the recycled material. Traditionally, rPETG is blended with virgin material to form a physical blend. These blends often lose performance either with respect to mechanical properties or in color and appearance and often cannot be used in the same applications as the virgin material.

It has become commercially desirable to use previously used, particularly post-consumer PET in the synthesis of new PET for making water and carbonated beverage bottles. Several chemical treatment techniques are known for facilitating the regeneration and recycling of previously used polyester material. Such techniques are employed to depolymerize the recycled polyester material, whereby the polyester material is reduced to monomeric and/or oligomeric components. The monomeric and/or oligomeric components may then be repolymerized to produce recycled polyester material.

One known depolymerization technique is to subject the recycle PET to methanolysis. In accordance with the methanolysis approach, the rPET is reacted with methanol to produce dimethyl terephthalate (DMT) and ethylene glycol (EG). The DMT and EG may be readily purified and thereafter used to produce PET containing recycled polyester material. However, most conventional commercial PET production facilities throughout the world are designed to use either terephthalic acid (TPA) and on a smaller scale some facilities use DMT, but most facilities are not designed to use both, TPA and DMT as the monomeric raw material. Thus, additional processing is generally required to convert the DMT into the TPA needed as a raw material for many such facilities, and in either case, further purification of the glycols and DMT/TPA is required.

Another known depolymerization technique is hydrolysis, whereby recycled PET is reacted with water to depolymerize the rPET into TPA and EG. However, it is known that certain types of contaminants generally present in recycled PET are very difficult and expensive to remove from TPA. Moreover, for those facilities designed to use DMT as a raw material, the TPA must be converted into DMT, and purification of the glycols and DMT/TPA is further required.

Glycolysis may also be used for depolymerizing recycled PET. Glycolysis occurs when the rPET is reacted with EG, thus producing bis-(2-hydroxyethyl) terephthalate (BHET) and/ or its oligomers. Glycolysis has some significant advantages over either methanolysis or hydrolysis, primarily because BHET may be used as a raw material for either a DMT-based or a TPA-based PET production process without major modification of the production facility or further purification. Another significant advantage provided by the glycolysis technique is that the removal of glycol from the depolymerization solvent is not necessary.

Previously known glycolysis processes include the independent, complete glycolysis of post-consumer rPET and the subsequent addition of some portion of the glycolysis product to a polycondensation process. Such a glycolysis process is described in U.S. Pat. No. 5,223,544. Such processes require high pressures and a large excess of ethylene glycol. These requirements reduce the reactor efficiency by decreasing the potential production capacity of the reactor.

Typically, it has been found that high temperatures and large excesses of EG are required to solubilize the polyester molecule in these glycolysis processes so that it can then be broken down into its constituent parts such as BHET and oligomers thereof. The high temperatures and excessive EG results in the production of large quantities of diethylene glycol as a byproduct. The diethylene glycol thus produced cannot be readily removed from the BHET and so, if the BHET is then used to produce regenerated PET, the resultant PET product has a diethylene glycol content that is excessive causing the polymer to be unacceptable for many commercial uses.

Other known processes involving glycolysis require the retention in the reactor of a heel of BHET oligomer having a degree of polymerization greater than 10 at the end of a reaction run in order to solubilize the post-consumer rPET because the latter is insoluble in most solvents. These procedures are described in U.S. Pat. No. 4,609,680. Thus, there clearly remains a need in the art for a glycolysis process that can efficiently handle previously used, post-consumer rPET in the manufacture of new packaging grade PET.

The present disclosure provides a solution to the problems discussed above. In particular, the process of the present disclosure provides an efficient and economical procedure for utilizing recycled polyesters and/or recycled copolyesters including recycled PET, recycled PETG, recycled PETM, and recycled PCTM or mixtures of these materials to produce packaging grade polyester products.

In one embodiment, the viscosity of the material in the paste zone and the viscosity of the material leaving the paste zone is much reduced with rPETG (and rPCTM or blends with rPET) than with rPET alone. In one embodiment, TPA dissolves faster in rPET than in EG alone. In one embodiment the TPA may dissolve even faster in rPETG, rPETM or rPCTM.

In one embodiment TPA is completely replaced with recycled polyester or copolyester.

In one embodiment, the composition control of the final polyester product is made by combination of the recycled feed and the components added to the first reaction zone.

In one embodiment of the present disclosure, the copolyesters are produced in two main stages. The first stage reacts starting materials to form monomers and/or oligomers. If the starting materials entering the first stage include acid end groups, such as TPA or isophthalic acid, the first stage is referred to as esterification. The esterification stage can be a single step or can be divided into multiple steps. The second stage further reacts the monomers and/or oligomers to form the final copolyester product. The second stage is generally referred to as the polycondensation stage. The polycondensation stage can be a single step or can be divided into a prepolycondensation (or prepolymerization) step and a final (or finishing) polycondensation step.

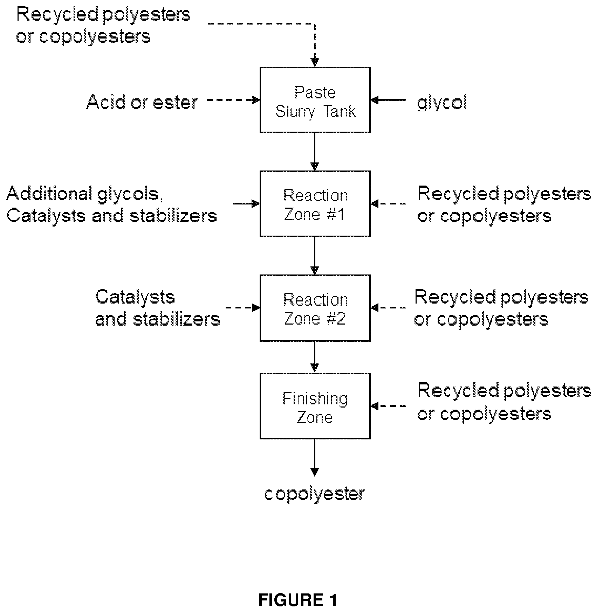

Figure 1 shows a process flow diagram for making polyester or copolyesters such as PETG in accordance with various embodiments of this disclosure. While the flow diagram (Figure 1) shows the reaction zones as separate vessels, which are typically continuous stirred tank reactors (CSTRs), the vessels may be an integral unit having multiple esterification zones with appropriate partitions and controls. Likewise, while the reaction zones are shown as separate vessels, which are typically CSTRs of the wipe film or thin film type, the vessels may be combined in one or more integral units having multiple polycondensation zones with appropriate partitions and controls. Various other types of esterification and polycondensation reactors as well as reactor arrangements are known in the art and may be adapted for use in accordance with the present disclosure.

Referring to Figure 1, in one embodiment, a paste that is made up of EG and TPA in a 2:1 mole ratio with recycled copolyesters and/or polyesters is fed into the location labeled as the Paste Tank. Additional EG is fed into the first reaction zone or reactor 1 and other glycols such as CHDM, TMCD, NPG, and DEG can also be fed into the first reaction zone based on the targeted final composition of the copolyester at the same location and optionally, additional recycled material can be added. In one embodiment, these raw materials may be added separately and/or directly into the first reaction zone. In some embodiments, recycled copolyesters and/or polyesters are fed into at least one of the following locations the Paste Tank, Zone #1, Zone #2 or the Finishing Zone. In some embodiments, recycled copolyesters and/or polyesters are fed into one or more of the following locations the Paste Tank, Zone #1, Zone #2 or the Finishing Zone.

The reaction mixture in the first reaction zone is heated via a recycle loop that includes a heat exchanger. Esterification takes place in the first reaction zone to form a first esterification product comprising copolyester monomers, oligomers, or both and unreacted TPA, EG, and other glycols such as CHDM, TMCD, NPG or DEG. The reaction product of the first reaction zone is then passed to a second reaction zone. Further esterification takes place in the second reaction zone to form a second esterification product comprising additional copolyester monomers, oligomers, or both.

In some embodiments, the average chain length of the monomers and/or oligomers exiting the esterification stage can be less than 25, from 1 to 20, or from 5 to 15.

In one embodiment, the second reaction zone is optional. In some embodiments the product passes from the first reaction zone to a third reaction zone.

The reaction product of the second reaction zone is then passed to a third reaction zone. In some embodiments, polycondensation optionally in the presence of a polycondensation catalyst takes place in the third reaction zone to form a prepolymerization product comprising copolyester oligomers. In some embodiments, polycondensation takes place in the third reaction zone without the need for a polycondensation catalyst to form a prepolymerization product comprising copolyester oligomers In some embodiments, the catalysts residues remaining from the recycled copolyesters and polyesters is sufficient to act as the polycondensation catalyst. In some embodiments, the third reaction zone converts the monomers exiting the esterification stage into oligomers having an average chain length in the range of 2 to 40, 5 to 35, or 10 to 30.

The prepolymerization product is then passed to one or more reaction zones or finishing zones. Additional polycondensation optionally in the presence of the polycondensation catalyst takes place in the finishing zones to form a copolyester with the desired average chain length or IV. The copolyester is then withdrawn from the finishing zone for subsequent processing, such as formation into pellets via an extruder connected to an underwater pelletizer.

In one embodiment, the temperature in the paste tank is between 120-180°C.

In one embodiment, the temperature in the glycolysis and transesterification zone is 200-300°C.

In one embodiment, the reacting step is carried out at a melt temperature of at least 253ºC, at least 255ºC, or at least 257ºC. In one embodiment, additionally or alternatively, the reacting step is carried out at a melt temperature of not more than 290ºC, not more than 285ºC, not more than 280ºC, not more than 275ºC, not more than 270ºC, or not more than 265ºC. In various embodiments, the reacting step is carried out at a melt temperature of 250 to 270ºC, or 257 to 265ºC.

In one embodiment, the reacting step is carried out at a pressure of 25 to 40 psi, or 30 to 40 psig.

In one embodiment, the esterification step is carried out at a melt temperature of at least 253ºC, at least 255ºC, or at least 257ºC. In one embodiment, additionally or alternatively, the esterification step is carried out at a melt temperature of not more than 290ºC, not more than 285ºC, not more than 280ºC, not more than 275ºC, not more than 270ºC, or not more than 265ºC. In various embodiments, the esterification step is carried out at a melt temperature of 250 to 270ºC, or 257 to 265ºC.

In one embodiment, the esterifying step (d) is carried out at a pressure of 8 to 20 psig.

In one embodiment, the average residence time of the reactants in the reacting step is 2 hours or less, 1.75 hours or less, 1.5 hours or less, 1.25 hours or less, 1 hour or less, or 0.75 hours or less. In various embodiments, the average residence time of the reactants in the reacting step is 30 to 40 minutes.

In one embodiment, the average residence time of the reactants in the esterifying step is 2 hours or less, 1.75 hours or less, 1.5 hours or less, 1.25 hours or less, 1 hour or less, or 0.75 hours or less. In various embodiments, the average residence time of the reactants in the esterifying step (d) is 30 to 40 minutes.

In various embodiments, the overall molar ratio of EG:TPA introduced into the process ranges from 2.3:1 to 3.0:1.

In various embodiments, the overall molar ratio of EG:TPA introduced into the process ranges from 2.3:1 to 2.71:1.

The temperature, pressure, and average residence time of the reacting step in the first reaction zone are those described above.

In various embodiments, the reacting step in the first reaction zone is carried out at a melt temperature of 250 to 270ºC and a pressure of 25 to 40 psi.

In various embodiments, the reacting step in the first reaction zone is carried out at a melt temperature of 257 to 265ºC and a pressure of 30 to 40 psi.

The temperature, pressure, and average residence time of the esterify step in the second reaction zone may be those described above.

In various embodiments, the esterifying step in the second reaction zone is carried out at a melt temperature of 250 to 270ºC and a pressure of 8 to 20 psi.

In various embodiments, the esterifying step in the second reaction zone is carried out at a melt temperature of 257 to 265ºC and a pressure of 8 to 20 psi.

Polycondensation catalysts useful in the processes of the present disclosure are not particularly limiting. Examples of such catalysts include titanium-based compounds, antimony-based compounds, and germanium-based compounds. Titanium catalysts are very efficient and offer high polycondensation rates at low catalyst levels. The polycondensation catalysts may be added either during the esterification stage or the polycondensation stage. In one embodiment, they are added with the feed materials into the first reaction zone. In one embodiment, the catalyst is added in the range of 1 to 500 ppm, based on the weight of the copolyester. In one embodiment, in the case of titanium, the catalyst may be added in the range of 1 to 50 ppm, based on the weight of the copolyester.

In one embodiment, the catalysts choice is affected by the catalysts that originate from the recycled feed. Specific catalytic advantages are achieved by the combination of catalysts from the feed and catalysts added to the first reaction zone and the second reaction zone. Catalysts likely coming from rPET include Sb, and Li/Al. Catalysts coming from rPETG could be Ti, Co, Ge, and Sb. Catalysts coming from rPETM and rPCTM include Co.

In some embodiments, phosphorus compounds are often added, along with the catalyst, to improve thermal stability. Phosphorus compounds useful as thermal stabilizers include phosphoric acid, phosphorous acid, phosphonic acid, phosphinic acid, phosphonous acid, and various esters and salts thereof. The esters can be alkyl, branched alkyl, substituted alkyl, difunctional alkyl, alkyl ethers, aryl, and substituted aryl. In some embodiments, suitable thermal stabilizers include triphenyl phosphate Merpol A. In one embodiment, phosphorus is added in the range of 10 to 100 ppm, based on the weight of the copolyester.

In various embodiments, one or more other additives can be added to the starting materials, the copolyesters, and/or the copolyester monomers/oligomers at one or more locations within the process. In various embodiments, suitable additives can include, for example, trifunctional or tetrafunctional comonomers, such as trimellitic anhydride, trimethylolpropane, pyromellitic dianhydride, pentaerythritol, or other polyacids or polyols; crosslinking or other branching agents; colorants; toners; pigments; carbon black; glass fibers; fillers; impact modifiers; antioxidants; UV absorbent compounds; oxygen scavenging compound; etc.

The processes according to this disclosure are particularly suitable for use on an industrial scale. For example, in one embodiment, they may be practiced on commercial production lines capable of running at rates of 500 to 30,000 lbs/hr of polymer.

In another aspect, this disclosure relates to copolyesters produced from the processes of this disclosure.

In still further accordance with the foregoing process, the new polyester product may contain ethylene glycol, diethylene glycol, and 1,4-cyclohexanedimethanol diol units, with the 1,4-cyclohexanedimethanol units comprising up to about 25 mol % of the total of the diol units and diethylene glycol comprising up to 15 mol % of the total diol units. In this case, the 1,4-cyclohexanedimethanol and diethylene glycol units may be added directly to a part of ethylene glycol component in the first reaction mixture or originate from a part of the postconsumer poly(ethylene terephthalate) or glycol-modified poly(ethylene terephthalate) flake material.

In various embodiments, the copolyester comprises:
(a) a diacid component comprising 60-100 mol% of residues of terephthalic acid, isophthalic acid, or mixtures thereof; and
(b) a diol component comprising 0-96.5 mol% of residues of ethylene glycol and 3.5 to 100 mol% of residues of 1,4-cyclohexanedimethanol,
wherein the diacid component is based on 100 mol% of total diacid residues in the copolyester and the diol component is based on 100 mol% of total diol residues in the copolyester.

In various embodiments, the copolyester comprises:
(a) a diacid component comprising 90 to 100 mol% of residues of terephthalic acid; and
(b) a diol component comprising 50 to 96.5 mol% of residues of ethylene glycol and 3.5 to 50 mol% of residues of 1,4-cyclohexanedimethanol,
wherein the diacid component is based on 100 mol% of total diacid residues in the copolyester and the diol component is based on 100 mol% of total diol residues in the copolyester.

In various embodiments, the copolyester comprises:
(a) a diacid component comprising 90 to 100 mol% of residues of terephthalic acid; and
(b) a diol component comprising 0 to 50 mol% of residues of ethylene glycol and 50 to 100 mol% of residues of 1,4-cyclohexanedimethanol,
wherein the diacid component is based on 100 mol% of total diacid residues in the copolyester and the diol component is based on 100 mol% of total diol residues in the copolyester.

In various embodiments, the copolyester comprises:
(a) a diacid component comprising 60 to 100 mol% of residues of terephthalic acid; and
(b) a diol component comprising 65 to 85 mol% of residues of ethylene glycol and 25 to 35 mol% of residues of 1,4-cyclohexanedimethanol,
wherein the diacid component is based on 100 mol% of total diacid residues in the copolyester and the diol component is based on 100 mol% of total diol residues in the copolyester.

In various embodiments, the copolyester has an inherent viscosity of 0.4 to 1.5 dL/g or 0.5 to 1.2dL/g or 0.6 to 0.9 dL/g.

In various other embodiments, the copolyester comprises:
(a) a diacid component comprising 100 mol% of residues of terephthalic acid, isophthalic acid, or mixtures thereof;
(b) a diol component comprising 0 to 96.5 mol% of residues of ethylene glycol, 3.5 to 100 mol% of residues of 1,4-cyclohexanedimethanol, and 0 to 0.4 mol% of residues of trimellitic anhydride;and

wherein the copolyester has an inherent viscosity (IV) of 0.4 to 1.5 dL/g,
wherein all weight percentages are based on the total weight of the copolyester; and
wherein the diacid component is based on 100 mol% of total diacid residues in the copolyester and the diol component is based on 100 mol% of total diol residues in the copolyester.

In one embodiment, the present disclosure includes an article of manufacture or a shaped article comprising the shrink films of any of the shrink film embodiments of this disclosure. In another embodiment, the present disclosure includes an article of manufacture or a shaped article comprising the oriented films of any of the oriented film embodiments of this disclosure.

In certain embodiments, the present disclosure includes but is not limited to shrink films applied to containers, plastic bottles, glass bottles, packaging, batteries, hot fill containers, and/or industrial articles or other applications. In one embodiment, the present disclosure includes but is not limited to oriented films applied to containers, packaging, plastic bottles, glass bottles, photo substrates such as paper, batteries, hot fill containers, and/or industrial articles or other applications.

In certain embodiments of the present disclosure, the shrink films of this disclosure can be formed into a label or sleeve. The label or sleeve can then be applied to an article of manufacture, such as, the wall of a container, battery, or onto a sheet or film.

The oriented films or shrink films of the present disclosure can be applied to shaped articles, such as, sheets, films, tubes, bottles and are commonly used in various packaging applications. For example, films and sheets produced from polymers such as polyolefins, polystyrene, poly(vinyl chloride), polyesters, polylactic acid (PLA) and the like are used frequently for the manufacture of shrink labels for plastic beverage or food containers. For example, the shrink films of the present disclosure can be used in many packaging applications where the shrink film applied to the shaped article exhibits properties, such as, good printability, high opacity, higher shrink force, good texture, and good stiffness.

The combination of the improved shrink properties as well as the improved toughness should offer new commercial options, including but not limited to, shrink films applied to containers, plastic bottles, glass bottles, packaging, batteries, hot fill containers, and/or industrial articles or other applications.

Additionally, the materials of this disclosure can be extruded into sheet and the sheet can be further thermoformed into 3-dimensional articles. The materials of this disclosure can be converted into molded articles, film, shrinkable films, oriented films, blow molded articles, and blown film articles.

The present disclosure includes and expressly contemplates and discloses any and all combinations of embodiments, features, characteristics, parameters, and/or ranges mentioned herein. That is, the subject matter of the present disclosure may be defined by any combination of embodiments, features, characteristics, parameters, and/or ranges mentioned herein.

Any process/method, apparatus, compound, composition, embodiment, or component of the present disclosure may be modified by the transitional terms "comprising," "consisting essentially of," or "consisting of," or variations of those terms.

As used herein, the indefinite articles "a" and "an" mean one or more, unless the context clearly suggests otherwise. Similarly, the singular form of nouns includes their plural form, and vice versa, unless the context clearly suggests otherwise.

While attempts have been made to be precise, the numerical values and ranges described herein should be considered as approximations, unless the context indicates otherwise. These values and ranges may vary from their stated numbers depending upon the desired properties sought to be obtained by the present disclosure as well as the variations resulting from the standard deviation found in the measuring techniques. Moreover, the ranges described herein are intended and specifically contemplated to include all sub-ranges and values within the stated ranges. For example, a range of 50 to 100 is intended to include all values within the range including sub-ranges such as 60 to 90, 70 to 80, etc.

Any two numbers of the same property or parameter reported in the working examples may define a range. Those numbers may be rounded off to the nearest thousandth, hundredth, tenth, whole number, ten, hundred, or thousand to define the range.

The content of all documents cited herein, including patents as well as non-patent literature, is hereby incorporated by reference in their entirety. To the extent that any incorporated subject matter contradicts with any disclosure herein, the disclosure herein shall take precedence over the incorporated content.

This disclosure can be further illustrated by the following working examples, although it should be understood that these examples are included merely for purposes of illustration and are not intended to limit the scope of the present disclosure.

### EXAMPLES

### Laboratory Scale Process Results:

General procedure: A mixture of 53.16 g of PTA, 62.21 g of EG, 2.97 g of DEG, 11.52 g of CHDM, and 18.86 g of rPET, was placed in a 500-milliliter flask equipped with an inlet for nitrogen, a metal stirrer, and a short distillation column. In addition, 0.14 ml of the Ti catalyst solution (targeting 16 ppm Ti) and 1 ml of the Mn solution (targeting 45 ppm Mn) were added to the flask. The flask was placed in a Wood's metal bath already heated to 200° C. The stirring speed was set to 200 RPM at the beginning of the experiment. The contents of the flask were heated at 200° C for 60 minutes and then the temperature was gradually increased to 250° C over 300 minutes. The reaction mixture was then heated to 270° C for 20 minutes as the stirrer was slowed down to 100 rpm and a vacuum was gradually applied to 0.4 torr. The temperature was then increased to 278°C over 20 minutes and stirring was reduced to 60 rpm, the mixture was held under these conditions for 120 minutes. After this hold, the mixture was returned to atmospheric pressure and removed from the heat. The polymer was then removed from the flask for analysis. Example 1 was made using 100% replacement of TPA with rPET. Example 2 was made with 20% rPET replacement of TPA.

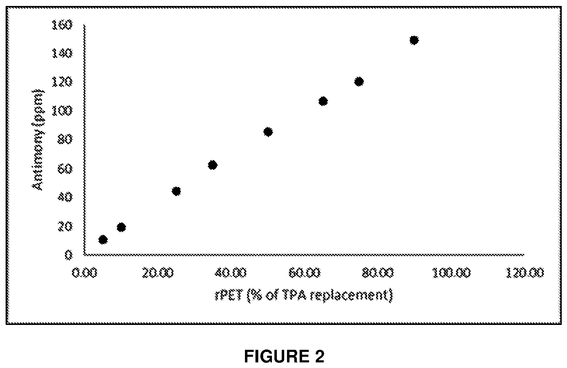

In one aspect of the present disclosure, given a reasonably constant supply of rPET the amount of Sb and other residual catalysts and additives can be predictable as shown in Figure 2. In some embodiments, Figure 2 illustrates that you can balance the amount of antimony you have to add to the system based on the amount of rPET you feed into the process. For example, if you want 100 ppm of Sb in the final product you could feed 60% rPET into the process or feed 20% rPET and add 60 ppm of Sb into the system.

### Laboratory Resin Characterization:

| Examples | IV | b* | Ti | P | Mn | Sb |
|---|---|---|---|---|---|---|
| | | | ppm | ppm | ppm | ppm |
| 1 | 0.71 | 5.48 | 14.6 | 47.8 | 33.6 | 175.2 |
| 2 | 0.825 | 6.59 | 15.2 | 31.9 | 40.5 | 46.3 |

| Examples | EG | DEG | CHDM | TEG |
|---|---|---|---|---|
| | mole % | mole % | mole % | mole % |
| 1 | 75.3 | 9.3 | 15.1 | 0.3 |
| 2 | 69.6 | 11.8 | 18.1 | 0.5 |

The resins made in both cases were similar with respect to all critical performance criteria. Both materials had similar color, IV, and composition regardless of the amount of rPET that was added.

### Pilot Plant Process Results:

Resin samples (A1 and A2) were made by adding 7.3 weight % recycled PET by weight to a reactor containing 45.7 weight % ethylene glycol, 0.7 weight % diethylene glycol, 9.8 weight % cyclohexane dimethanol, and 36.4 weight % terephthalic acid. A Ti catalyst was added at 30 ppm. The glycol to acid ratio was 3.3, with ethylene glycol and cyclohexane dimethanol used to make up the excess. The reaction mixture was held at 250-255°C and 25-30 psig for 3-3.5 hours. Phosphorus was added at 21 ppm and then the reaction mixture was heated to 270°C and stirred under vacuum until the target melt viscosity was reached.

A control resin sample (B) was made using the same process except that no rPET or DEG were added to the reaction mixture and 50 ppm of Ti catalyst was used. 44.1 weight % ethylene glycol, 10.5 weight % cyclohexane dimethanol, and 45.5 weight % terephthalic acid were charged to a reactor. The glycol to acid ratio was 2.9, with ethylene glycol and cyclohexane dimethanol used to make up the excess. The CHDM excess was the same as the previous samples, while the EG excess decreased.

The characterization of the resins is described in the following Table.

### Pilot Plant Resin Characterization:

| Examples | IV | b* | Ti | P | Sb |
|---|---|---|---|---|---|
| | | | ppm | ppm | ppm |
| A1 | 0.748 | 13 | 26.2 | 13.7 | 26.8 |
| A2 | 0.752 | 11.8 | 26 | 22 | 28 |
| B | 0.75 | 7.8 | 41 | 26 | <1 |

| Examples | EG | DEG | CHDM | TEG | CEG |
|---|---|---|---|---|---|
| | mole % | mole % | mole % | mole % | |
| A1 | 62.6 | 12.2 | 23 | 2.1 | 30.4 |
| A2 | 61.9 | 12.5 | 23.3 | 2.2 | 29.6 |
| B | 64 | 11.1 | 23 | 1.9 | 24.5 |

Resin examples A1 and A2 were combined to create resin A. Resins A and B were dried in a desiccant drier at 60°C for 4-6h. Films with a thickness of 10 mils (250 microns) were then extruded using a 2.5" Davis and Standard extruder. Once extruded, the films were cut and stretched on a Bruckner Karo 4 tenter frame to a final thickness of 50 microns. The films were stretched at a 5:1 ratio, with a stretch rate of 100%/sec, and a stretch temperature 5-15 degrees Celsius above the Tg of the extruded film. Characterization of the shrinkable films made with this process is described in the following Table.

### Examples A and B: Shrinkable Films made from resin compositions made from rPET

| | | Example A | | Example B | |
|---|---|---|---|---|---|
| | Temp. (°C) | MD (A) | TD (A) | MD (B) | TD (B) |
| **Shrink Bath Data (10s Shrink Baths)** | 60 | 0.0 | 3.0 | 0.0 | 2.0 |
| | 65 | 0.5 | 18.0 | 2.0 | 13.5 |
| | 70 | -8.0 | 46.0 | -3.0 | 36.5 |
| | 75 | -14.0 | 61.0 | -8.5 | 56.0 |
| | 80 | -10.0 | 74.0 | -10.0 | 72.0 |
| | 85 | -8.5 | 78.0 | -7.5 | 77.0 |
| | 90 | -8.0 | 78.5 | -7.0 | 78.5 |
| | 95 | -10.0 | 78.5 | -6.0 | 79.0 |
| | | | | | |
| **Shrink Force** | MPa | 6.0 | | 6.6 | |
| **IV** | Extruded film, g/dL | 0.714 | | 0.701 | |
| | | | | | |
| **DSC (Stretched)** | | | | | |
| | Tg (°C) | 67.5 | | 68.4 | |
| | Tm (°C) | 149.7 | | 157.1 | |
| **MD Break Strain** | 300 mm/min , % | 481 | | 477 | |
| **MD Break Strain** | 500 mm/min , % | 359 | | 277 | |

Resins A and B had very similar compositions, IV, and color. The shrinkable films made with the resins also had very similar performance. These results demonstrate that incorporation of rPET into the resin manufacturing process does not affect the final performance of the resin or articles made from the resin.

### Commercial Scale Process:

Resin samples were also made on commercial manufacturing equipment to demonstrate the utility of this invention.

In the commercial scale process, 5% recycled PET was added along with terephthalic acid and ethylene glycol to the slurry tank. The slurry tank was agitated for more than 30 min. to allow for adequate mixing. This slurry was then added to reaction zone 1 along with catalyst, additional ethylene glycol, diethylene glycol, and cyclohexanediol. This mixture was reacted for at least 1h above 235°C under 35+ psig of pressure to simultaneously depolymerize PET and react the monomers. Then monomers and oligomers from reaction zone 1were passed to reaction zone 2 where they were further reacted while stripping out additional glycols but maintaining reaction temperatures. This material passed into reaction zone 3 for finishing under higher temperature and deeper vacuum conditions. Characterization of the final product, Example C is shown in the following Table in comparison to another copolyester resin with the same composition also made in the commercial process without added rPET, Example D.

### Commercial Process Resin Characterization:

| Examples | IV | b* | Ti | P | Sb |
|---|---|---|---|---|---|
| | | | ppm | ppm | ppm |
| C | 0.74 | 2.8 | 17.73 | 18.4 | 4.8 |
| D | 0.76 | 2 | 14.5 | 21.2 | 0.8 |

| Examples | EG | DEG | CHDM | TEG |
|---|---|---|---|---|
| | mole % | mole % | mole % | mole % |
| C | 63.56 | 11.83 | 23.54 | 1.08 |
| D | 64.56 | 11.56 | 22.90 | 0.7 |

Resins C and D were dried in a desiccant drier at 60°C for 4-6h. Films with a thickness of 10 mils (250 microns) were then extruded using a 2.5" Davis and Standard extruder. Once extruded, the films were cut and stretched on a Bruckner Karo 4 tenter frame to a final thickness of 50 microns. The films were stretched at a 5:1 ratio, with a stretch rate of 100%/sec, and a stretch temperature 5-15 degrees Celsius above the Tg of the extruded film. Characterization of the shrinkable films made with this process is described in the following Table.

### Examples C and D: Shrinkable Films made from resin compositions made from rPET

| | | Example C | | Example D | |
|---|---|---|---|---|---|
| | Temp. (°C) | MD (C) | TD (C) | MD (D) | TD (D) |
| **Shrink Bath Data (10s Shrink Baths)** | 60 | 0.5 | 1.5 | 0.0 | 1.0 |
| | 65 | 2.0 | 8.0 | 1.0 | 12.0 |
| | 70 | -3.0 | 32.0 | -3.5 | 33.0 |
| | 75 | -10.0 | 56.0 | -11.0 | 52.0 |
| | 80 | -12.0 | 69.0 | -14.0 | 66.0 |
| | 85 | -11.5 | 76.0 | -12.5 | 76.0 |
| | 90 | -8.5 | 78.5 | -8.0 | 78.0 |
| | 95 | -10.5 | 79.0 | -12.0 | 78.0 |
| | | | | | |
| **Shrink Force** | MPa | 7.3 | | 7.1 | |
| **IV** | Extruded film, g/dL | 0.716 | | 0.694 | |
| | | | | | |
| **DSC (Stretched)** | | | | | |
| | Tg (°C) | 69.7 | | 69.1 | |
| | Tm (°C) | 161.2 | | 160 | |
| **MD Break Strain** | 300 mm/min , % | 515 | | 461 | |
| **MD Break Strain** | 500 mm/min , % | 314 | | 54 | |

Resins C and D had very similar compositions, IV, and color. The shrinkable films made with the resins also had very similar performance. These results demonstrate that incorporation of rPET into the resin manufacturing process does not affect the final performance of the resin or articles made from the resin.

This disclosure has been described in detail with particular reference to specific embodiments thereof, but it will be understood that variations and modifications can be made within the scope of this disclosure as defined by the claims.

## Claims

1. A process for producing a polyester composition from recycled polyesters comprising:
(a) introducing terephthalic acid (TPA); and ethylene glycol (EG); and recycled polyesters comprising one or more of recycled PET, recycled PETG, recycled PCT, recycled PCTA, recycled PCTG, recycled PCTM or recycled PETM into a paste tank to form a slurry that is stirred and heated at temperatures up to 150°C;
(b) passing the paste tank slurry to a first reaction zone;
(c) introducing at least one additional glycol comprising 1,4-cyclohexanedimethanol (CHDM), neopentyl glycol (NPG), or 2,2,4,4-tetramethyl-1,3-cyclobutanediol (TMCD), diethylene glycol (DEG) or isosorbide, and optionally adding additional recycled polyesters comprising one or more of recycled PET, recycled PETG, recycled PCT, recycled PCTA, recycled PCTG, recycled PCTM or recycled PETM; and optionally adding additional terephthalic acid (TPA); and ethylene glycol (EG) to a total glycol:TPA molar ratio of 1:1 to 4:1 into the first reaction zone, optionally in the presence of an esterification catalyst and/or stabilizer;
(d) reacting the TPA and EG and the recycled polyesters with the at least one additional glycol in the first reaction zone at a melt temperature of at least 175°C to form an esterification product comprising oligomers and unreacted TPA, EG, and the additional glycol(s);
(e) optionally passing the esterification product from the first zone to a second reaction zone;
(f) reacting further the esterification product from the first zone and optionally adding additional glycols comprising one or more of CHDM, NPG, TMCD, DEG or isosorbide and/or additional recycled polyesters comprising one or more of recycled PET, recycled PETG, recycled PCT, recycled PCTA, recycled PCTG, recycled PCTM or recycled PETM, optionally in the second reaction zone, at a melt temperature of at least 200°C to form an esterification product comprising polyester oligomers, optionally in the presence of an esterification catalyst and/or stabilizer;
(g) passing the resulting esterification product, from one or multiple reaction zone(s) to a third reaction zone;
(h) polycondensing the resulting esterification product in the third reaction zone and optionally adding additional recycled polyesters comprising one or more of recycled PET, recycled PETG, recycled PCT, recycled PCTA, recycled PCTG, recycled PCTM or recycled PETM to form a polymerization product comprising polyesters, optionally in the presence of a polycondensation catalyst and/or stabilizer.

2. The process of claim 1, wherein step (d) is carried out at a melt temperature of at least 240°C; or wherein step (d) is carried out at a melt temperature of at least 250°C and a pressure of up to 30 psig.

3. The process of claim 1, wherein the step (f) is carried out at a melt temperature of at least 240°C.

4. The process of claim 1, wherein the esterification catalyst comprises one or more of Mn, Ti, Zn, Co, Ge or Al; or

5. The process of claim 1, wherein the polycondensation catalyst comprises one or more of Sn, Sb, Ti, Li/Al, Al, Ge, Pb, Zn, Co, Bi, Cd, Ca or Ni.

6. The process of claim 1, wherein the polyester has an inherent viscosity of 0.4 to 1.2 dL/g; or wherein the polyester has an inherent viscosity of 0.5 to 0.9 dL/g.

7. The process of claim 1, wherein the polyester comprises 19 to 96.5 mol% of ethylene glycol and 3.5 to 81 mol% of 1,4-cyclohexanedimethanol, based on the total diol residues in the polyester; or
wherein the polyester comprises 50 to 90 mol% of ethylene glycol and 10 to 50 mol% of 1,4-cyclohexanedimethanol, based on the total diol residues in the polyester; or
wherein the polyester comprises 65 to 75 mol% of ethylene glycol and 25 to 35 mol% of 1,4-cyclohexanedimethanol, based on the total diol residues in the polyester; or
wherein the polyester comprises 60 to 70 mol% of ethylene glycol and 20 to 25 mol% of 1,4-cyclohexanedimethanol, and 10-15% diethylene glycol based on the total diol residues in the polyester; or
wherein the polyester comprises 75 to 93 mol% of ethylene glycol and 5-15 mol% of neopentyl glycol, and 2-10% diethylene glycol based on the total diol residues in the polyester; or
wherein the polyester comprises 65 to 92 mol% of ethylene glycol, 1-10 mol% of 1,4-cyclohexanedimethanol and 5-15 mol% of neopentyl glycol, and 2-10% diethylene glycol based on the total diol residues in the polyester.

8. The process of claim 1, wherein the polyester comprises:
(a) a diacid component comprising 90 to 100 mol% of terephthalic acid; and
(b) a diol component comprising 65 to 75 mol% of ethylene glycol and 25 to 35 mol% of residues of 1,4-cyclohexanedimethanol,
wherein the diacid component is based on 100 mol% of total diacid residues in the polyester and the diol component is based on 100 mol% of total diol residues in the polyester.

9. The process of claim 1, wherein the polyester comprises from 50 mole% to 99.99 mole% of 1,4-cyclohexanedimethanol, 0.01 mole% to 50 mole% of ethylene glycol, and from 70 mole% to 100 mole% of terephthalic acid, based on a total of 100 mole% acid residues and a total of 100 mole% diol residues; or
wherein the polyester comprises from 80 mole% to 99.99 mole% of 1,4-cyclohexanedimethanol, 0.01 mole% to 20 mole% of ethylene glycol, and from 70 mole% to 100 mole% of terephthalic acid, based on a total of 100 mole% acid residues and a total of 100 mole% diol residues;
wherein the polyester comprises from 90 mole% to 99.99 mole% of residues of 1,4-cyclohexanedimethanol, 0.01 mole% to 10 mole% of residues of ethylene glycol, and from 70 mole% to 100 mole% of residues of terephthalic acid, based on a total of 100 mole% acid residues and a total of 100 mole% diol residues;
wherein the polyester comprises from 95 mole% to 99.99 mole% of residues of 1,4-cyclohexanedimethanol, 0.01 mole% to 10 mole% of residues of ethylene glycol, from 90 mole% to 100 mole% of residues of terephthalic acid, and 0.01 to 10 mole% of residues of isophthalic acid, based on a total of 100 mole% acid residues and a total of 100 mole% diol residues;
wherein the polyester comprises from 20 mole% to less than 50 mole% of residues of 1,4-cyclohexanedimethanol, greater than 50 mole% to 80 mole% of residues of ethylene glycol, and from 70 mole% to 100 mole% of residues of terephthalic acid, based on a total of 100 mole% acid residues and a total of 100 mole% diol residues; or

10. The process of claim 1, wherein the polyester comprises
(a) a dicarboxylic acid component comprising:
(i) about 70 to about 100 mole % of terephthalic acid residues, and
(ii) about 0 to about 30 mole % of aromatic and/or aliphatic dicarboxylic acid residues having up to 20 carbon atoms; and
(b) a glycol component comprising:
(i) about 0 to about 40 mole % 2,2-dimethylpropane-1,3-diol (neopentyl glycol or NPG) residues;
(ii) about 0 to about 100 mole % 1,4-cyclohexanedimethanol (CHDM) residues;
(iii) about 0 to about 45 mole % 2,2,4,4-tetramethyl-1,3-cyclobutanediol (TMCD) residues;
(iv) about 0 to about 40 mole percent diethylene glycol (DEG) residues, whether or not formed in situ;
wherein the remainder of the glycol component comprises:
(v) residues of ethylene glycol, and
(vi) optionally, 0 to 10 mole% of the residues of at least one other modifying glycol;
wherein the total mole% of the dicarboxylic acid component is 100 mole%, and
wherein the total mole% of the glycol component is 100 mole%.

11. The process of claim 1, wherein the polyester comprises at least about 90 mole% terephthalic acid and about 59 to about 77.5 mole% ethylene glycol, and about 15 to about 28 mole% 1,4-cyclohexanedimethanol (CHDM), and about 7.5 to about 13 mole% diethylene glycol (DEG); wherein the diacid component is based on 100 mole percent and the diol component is based on 100 mole percent.

12. A shrinkable film, a voided film a molded article, a thermoformable article, an extruded film or sheet, a blown film, an extrusion blow-molded article comprising the polyester produced by the process of claim 1, wherein the polyester comprises a polycondensation catalyst.

13. A method of introducing or establishing recycle content in a polyester:
a. obtaining a recycled monomer allocation or credit for at least one recycled monomer comprising TPA, EG, DMT, CHDM, NPG, TMCD, or DEG.
b. converting the recycled monomers in a synthetic process according to claim 1 to make a polyester,
c. designating at least a portion of the polyester as corresponding to at least a portion of the recycled monomer allocation or credit, and optionally
d. offering to sell or selling the polyester as containing or obtained with recycled monomer content corresponding with such designation.

14. The process of any one of the preceding claims, wherein the amount of recycled polyester added to the process is from 5-100% based on the amount of TPA required.

15. The process of any one of the preceding claims, wherein the process further comprises adding a catalyst or additive via the addition of recycled polyester in which the catalyst or additive is a component of the recycled polyester; such as Sb, Ti, Co, Mn, Li, Al, P.

## Patentansprüche

1. Vorgang zur Herstellung einer Polyesterzusammensetzung aus recycelten Polyestern, umfassend:
(a) Einführen von Terephthalsäure (TPA); und Ethylenglykol (EG); und recycelten Polyestern, die eines oder mehrere von recyceltem PET, recyceltem PETG, recyceltem PCT, recyceltem PCTA, recyceltem PCTG, recyceltem PCTM oder recyceltem PETM umfassen, in einen Pastenbehälter, um eine Aufschlämmung zu bilden, die gerührt und bei Temperaturen bis zu 150 °C erhitzt wird;
(b) Leiten der Pastenbehälter-Aufschlämmung zu einer ersten Reaktionszone;
(c) Einführen von mindestens einem zusätzlichen Glykol, das 1,4-Cyclohexandimethanol (CHDM), Neopentylglykol (NPG) oder 2,2,4,4-Tetramethyl-1,3-cyclobutandiol (TMCD), Diethylenglykol (DEG) oder Isosorbid umfasst, und optional Zugeben von zusätzlichen recycelten Polyestern, die eines oder mehrere von recyceltem PET, recyceltem PETG, recyceltem PCT, recyceltem PCTA, recyceltem PCTG, recyceltem PCTM oder recyceltem PETM umfassen; und optional Zugeben von zusätzlicher Terephthalsäure (TPA); und Ethylenglykol (EG) bis zu einem Molverhältnis von Gesamtglykol:TPA von 1:1 bis 4:1 in der ersten Reaktionszone, optional in der Gegenwart eines Veresterungskatalysators und/oder Stabilisators;
(d) Reagierenlassen der TPA und des EG und der recycelten Polyester mit dem mindestens einen zusätzlichen Glykol in der ersten Reaktionszone bei einer Schmelzetemperatur von mindestens 175 °C, um ein Veresterungsprodukt zu bilden, das Oligomere und nicht reagierte TPA, nicht reagiertes EG und das/die zusätzliche(n) Glykol(e) umfasst;
(e) optional Leiten des Veresterungsprodukts aus der ersten Zone zu einer zweiten Reaktionszone;
(f) weiteres Reagierenlassen des Veresterungsprodukts aus der ersten Zone und optional Zugeben von zusätzlichen Glykolen, die eines oder mehrere von CHDM, NPG, TMCD, DEG oder Isosorbid umfassen, und/oder von zusätzlichen recycelten Polyestern, die eines oder mehrere von recyceltem PET, recyceltem PETG, recyceltem PCT, recyceltem PCTA, recyceltem PCTG, recyceltem PCTM oder recyceltem PETM umfassen, optional in der zweiten Reaktionszone, bei einer Schmelzetemperatur von mindestens 200 °C, um ein Veresterungsprodukt zu bilden, das Polyesteroligomere umfasst, optional in der Gegenwart eines Veresterungskatalysators und/oder Stabilisators;
(g) Leiten des resultierenden Veresterungsprodukts aus einer oder mehreren Reaktionszone(n) zu einer dritten Reaktionszone;
(h) Polykondensieren des resultierenden Veresterungsprodukts in der dritten Reaktionszone und optional Zugeben von zusätzlichen recycelten Polyestern, die eines oder mehrere von recyceltem PET, recyceltem PETG, recyceltem PCT, recyceltem PCTA, recyceltem PCTG, recyceltem PCTM oder recyceltem PETM umfassen, um ein Polymerisationsprodukt zu bilden, das Polyester umfasst, optional in der Gegenwart eines Polykondensationskatalysators und/oder Stabilisators.

2. Vorgang nach Anspruch 1, wobei Schritt (d) bei einer Schmelzetemperatur von mindestens 240 °C durchgeführt wird; oder wobei Schritt (d) bei einer Schmelzetemperatur von mindestens 250 °C und einem Druck von bis zu 30 psig durchgeführt wird.

3. Vorgang nach Anspruch 1, wobei der Schritt (f) bei einer Schmelzetemperatur von mindestens 240 °C durchgeführt wird.

4. Vorgang nach Anspruch 1, wobei der Veresterungskatalysator eines oder mehrere von Mn, Ti, Zn, Co, Ge oder Al umfasst; oder

5. Vorgang nach Anspruch 1, wobei der Polykondensationskatalysator eines oder mehrere von Sn, Sb, Ti, Li/Al, Al, Ge, Pb, Zn, Co, Bi, Cd, Ca oder Ni umfasst.

6. Vorgang nach Anspruch 1, wobei der Polyester eine intrinsische Viskosität von 0,4 bis 1,2 dL/g aufweist; oder wobei der Polyester eine intrinsische Viskosität von 0,5 bis 0,9 dL/g aufweist.

7. Vorgang nach Anspruch 1, wobei der Polyester 19 bis 96,5 Mol-% Ethylenglykol und 3,5 bis 81 Mol-% 1,4-Cyclohexandimethanol umfasst, bezogen auf die gesamten Diolreste in dem Polyester; oder
wobei der Polyester 50 bis 90 Mol-% Ethylenglykol und 10 bis 50 Mol-% 1,4-Cyclohexandimethanol umfasst, bezogen auf die gesamten Diolreste in dem Polyester; oder
wobei der Polyester 65 bis 75 Mol-% Ethylenglykol und 25 bis 35 Mol-% 1,4-Cyclohexandimethanol umfasst, bezogen auf die gesamten Diolreste in dem Polyester; oder
wobei der Polyester 60 bis 70 Mol-% Ethylenglykol und 20 bis 25 Mol-% 1,4-Cyclohexandimethanol und 10-15 % Diethylenglykol umfasst, bezogen auf die gesamten Diolreste in dem Polyester; oder
wobei der Polyester 75 bis 93 Mol-% Ethylenglykol und 5-15 Mol-% Neopentylglykol und 2-10 % Diethylenglykol umfasst, bezogen auf die gesamten Diolreste in dem Polyester; oder
wobei der Polyester 65 bis 92 Mol-% Ethylenglykol, 1-10 Mol-% 1,4-Cyclohexandimethanol und 5-15 Mol-% Neopentylglykol und 2-10 % Diethylenglykol umfasst, bezogen auf die gesamten Diolreste in dem Polyester.

8. Vorgang nach Anspruch 1, wobei der Polyester Folgendes umfasst:
(a) eine Disäurekomponente, die 90 bis 100 Mol-% Terephthalsäure umfasst; und
(b) eine Diolkomponente, die 65 bis 75 Mol-% Ethylenglykol und 25 bis 35 Mol-% Reste von 1,4-Cyclohexandimethanol umfasst, wobei die Disäurekomponente auf 100 Mol-% der gesamten Disäurereste in dem Polyester basiert und die Diolkomponente auf 100 Mol-% der gesamten Diolreste in dem Polyester basiert.

9. Vorgang nach Anspruch 1, wobei der Polyester von 50 Mol-% bis 99,99 Mol-% 1,4-Cyclohexandimethanol, 0,01 Mol-% bis 50 Mol-% Ethylenglykol und von 70 Mol-% bis 100 Mol-% Terephthalsäure umfasst, bezogen auf eine Gesamtheit von 100 Mol-% Säurereste und eine Gesamtheit von 100 Mol-% Diolresten; oder
wobei der Polyester von 80 Mol-% bis 99,99 Mol-% 1,4-Cyclohexandimethanol, 0,01 Mol-% bis 20 Mol-% Ethylenglykol und von 70 Mol-% bis 100 Mol-% Terephthalsäure umfasst, bezogen auf eine Gesamtheit von 100 Mol-% Säurereste und eine Gesamtheit von 100 Mol-% Diolresten;
wobei der Polyester von 90 Mol-% bis 99,99 Mol-% Reste von 1,4-Cyclohexandimethanol, 0,01 Mol-% bis 10 Mol-% Reste von Ethylenglykol und von 70 Mol-% bis 100 Mol-% Reste von Terephthalsäure umfasst, bezogen auf eine Gesamtheit von 100 Mol-% Säurereste und eine Gesamtheit von 100 Mol-% Diolresten;
wobei der Polyester von 95 Mol-% bis 99,99 Mol-% Reste von 1,4-Cyclohexandimethanol, 0,01 Mol-% bis 10 Mol-% Reste von Ethylenglykol, von 90 Mol-% bis 100 Mol-% Reste von Terephthalsäure und 0,01 bis 10 Mol-% Reste von Isophthalsäure umfasst, bezogen auf eine Gesamtheit von 100 Mol-% Säurereste und eine Gesamtheit von 100 Mol-% Diolresten;
wobei der Polyester von 20 Mol-% bis weniger als 50 Mol-% Reste von 1,4-Cyclohexandimethanol, mehr als 50 Mol-% bis 80 Mol-% Reste von Ethylenglykol und von 70 Mol-% bis 100 Mol-% Reste von Terephthalsäure umfasst, bezogen auf eine Gesamtheit von 100 Mol-% Säurereste und eine Gesamtheit von 100 Mol-% Diolresten; oder

10. Vorgang nach Anspruch 1, wobei der Polyester Folgendes umfasst:
(a) eine Dicarbonsäurekomponente, umfassend:
(i) etwa 70 bis etwa 100 Mol-% Terephthalsäurereste und
(ii) etwa 0 bis etwa 30 Mol-% aromatische und/oder aliphatische Dicarbonsäurereste mit bis zu 20 Kohlenstoffatomen; und
(b) eine Glykolkomponente, umfassend:
(i) etwa 0 bis etwa 40 Mol-% 2,2-Dimethylpropan-1,3-diol(Neopentylglykol oder NPG)-Reste;
(ii) etwa 0 bis etwa 100 Mol-% 1,4-Cyclohexandimethanol(CHDM)-Reste;
(iii) etwa 0 bis etwa 45 Mol-% 2,2,4,4-Tetramethyl-1,3-cyclobutandiol(TMCD)-Reste;
(iv) etwa 0 bis etwa 40 Molprozent Diethylenglykol(DEG)-Reste, unabhängig davon, ob sie in situ gebildet wurden oder nicht; wobei der Rest der Glykolkomponente umfasst:
(v) Reste von Ethylenglykol und
(vi) optional 0 bis 10 Mol-% der Reste von mindestens einem anderen modifizierenden Glykol;
wobei der Gesamt-Mol-%-Satz der Dicarbonsäurekomponente 100 Mol-% beträgt und
wobei der Gesamt-Mol-%-Satz der Glykolkomponente 100 Mol-% beträgt.

11. Vorgang nach Anspruch 1, wobei der Polyester mindestens etwa 90 Mol-% Terephthalsäure und etwa 59 bis etwa 77,5 Mol-% Ethylenglykol und etwa 15 bis etwa 28 Mol-% 1,4-Cyclohexandimethanol (CHDM) und etwa 7,5 bis etwa 13 Mol-% Diethylenglykol (DEG) umfasst; wobei die Disäurekomponente auf 100 Molprozent basiert und die Diolkomponente auf 100 Molprozent basiert.

12. Schrumpffähige Folie, Folie mit Hohlräumen ein Formartikel, thermoformbarer Artikel, extrudierte Folie oder extrudiertes Blatt, Blasfolie, extrusionsblasgeformter Artikel, umfassend den Polyester, der durch den Vorgang nach Anspruch 1 hergestellt wurde, wobei der Polyester einen Polykondensationskatalysator umfasst.

13. Verfahren zum Einführen oder Etablieren eines Recyclinganteils in einem Polyester:
a. Erhalten einer Zuteilung oder Gutschrift für recyceltes Monomer für mindestens ein recyceltes Monomer, das TPA, EG, DMT, CHDM, NPG, TMCD oder DEG umfasst.
b. Umwandeln der recycelten Monomere in einem Synthesevorgang nach Anspruch 1, um einen Polyester herzustellen,
c. Bestimmen von mindestens einem Teil des Polyesters als mindestens einem Teil der Zuteilung oder Gutschrift für recyceltes Monomer entsprechend und optional
d. Anbieten zum Verkauf oder Verkaufen des Polyesters als recycelten Monomergehalt enthaltend oder mit diesem erhalten, welcher mit einer derartigen Bestimmung übereinstimmt.

14. Vorgang nach einem der vorhergehenden Ansprüche, wobei die Menge an recyceltem Polyester, die dem Vorgang zugegeben wird, von 5-100 % beträgt, bezogen auf die Menge an erforderlicher TPA.

15. Vorgang nach einem der vorhergehenden Ansprüche, wobei der Vorgang ferner das Zugeben eines Katalysators oder Additivs über die Zugabe von recyceltem Polyester umfasst, in welchem der Katalysator oder das Additiv ein Bestandteil des recycelten Polyesters ist; wie zum Beispiel Sb, Ti, Co, Mn, Li, Al, P.

## Revendications

1. Procédé de production d'une composition de polyester à partir de polyesters recyclés comprenant :
(a) l'introduction d'acide téréphtalique (TPA) ; et d'éthylène glycol (EG) ; et de polyesters recyclés comprenant un ou plusieurs parmi le PET recyclé, le PETG recyclé, le PCT recyclé, le PCTA recyclé, le PCTG recyclé, le PCTM recyclé ou le PETM recyclé dans une cuve à pâte pour former une suspension qui est agitée et chauffée à des températures allant jusqu'à 150 °C ;
(b) le passage de la suspension de cuve à pâte vers une première zone de réaction ;
(c) l'introduction d'au moins un glycol supplémentaire comprenant du 1,4-cyclohexanediméthanol (CHDM), du néopentylglycol (NPG) ou du 2,2,4,4-tétraméthyl-1,3-cyclobutanediol (TMCD), du diéthylène glycol (DEG) ou de l'isosorbide, et éventuellement l'ajout de polyesters recyclés supplémentaires comprenant un ou plusieurs parmi le PET recyclé, le PETG recyclé, le PCT recyclé, le PCTA recyclé, le PCTG recyclé, le PCTM recyclé ou le PETM recyclé ; et éventuellement l'ajout d'acide téréphtalique (TPA) supplémentaire ; et d'éthylène glycol (EG) jusqu'à un rapport molaire total glycol:TPA de 1:1 à 4:1 dans la première zone de réaction, éventuellement en présence d'un catalyseur d'estérification et/ou d'un stabilisant ;
(d) la réaction du TPA et de l'EG et des polyesters recyclés avec l'au moins un glycol supplémentaire dans la première zone de réaction à une température de fusion d'au moins 175 °C pour former un produit d'estérification comprenant des oligomères et du TPA, de l'EG et le ou les glycols supplémentaires non réagis ;
(e) éventuellement le passage du produit d'estérification de la première zone à une deuxième zone de réaction ;
(f) le fait de faire réagir davantage le produit d'estérification à partir de la première zone et éventuellement l'ajout de glycols supplémentaires comprenant un ou plusieurs parmi le CHDM, le NPG, le TMCD, le DEG ou l'isosorbide et/ou des polyesters recyclés supplémentaires comprenant un ou plusieurs parmi le PET recyclé, le PETG recyclé, le PCT recyclé, le PCTA recyclé, le PCTG recyclé, le PCTM recyclé ou le PETM recyclé, éventuellement dans la deuxième zone de réaction, à une température de fusion d'au moins 200 °C pour former un produit d'estérification comprenant des oligomères de polyester, éventuellement en présence d'un catalyseur d'estérification et/ou d'un stabilisant ;
(g) le passage du produit d'estérification résultant à partir d'une ou de multiples zones de réaction vers une troisième zone de réaction ;
(h) la polycondensation du produit d'estérification résultant dans la troisième zone de réaction et éventuellement l'ajout de polyesters recyclés supplémentaires comprenant un ou plusieurs parmi le PET recyclé, le PETG recyclé, le PCT recyclé, le PCTA recyclé, le PCTG recyclé, le PCTM recyclé ou le PETM recyclé pour former un produit de polymérisation comprenant des polyesters, éventuellement en présence d'un catalyseur de polycondensation et/ou d'un stabilisant.

2. Procédé selon la revendication 1, dans lequel l'étape (d) est réalisée à une température de fusion d'au moins 240 °C ; ou dans lequel l'étape (d) est réalisée à une température de fusion d'au moins 250 °C et à une pression allant jusqu'à 30 psig.

3. Procédé selon la revendication 1, dans lequel l'étape (f) est réalisée à une température de fusion d'au moins 240 °C.

4. Procédé selon la revendication 1, dans lequel le catalyseur d'estérification comprend un ou plusieurs parmi Mn, Ti, Zn, Co, Ge ou Al ; ou

5. Procédé selon la revendication 1, dans lequel le catalyseur de polycondensation comprend un ou plusieurs parmi Sn, Sb, Ti, Li/Al, Al, Ge, Pb, Zn, Co, Bi, Cd, Ca ou Ni.

6. Procédé selon la revendication 1, dans lequel le polyester a une viscosité inhérente de 0,4 à 1,2 dL/g ; ou dans lequel le polyester a une viscosité inhérente de 0,5 à 0,9 dL/g.

7. Procédé selon la revendication 1, dans lequel le polyester comprend 19 à 96,5 % en moles d'éthylène glycol et 3,5 à 81 % en moles de 1,4-cyclohexanediméthanol, sur la base du total de résidus de diol dans le polyester ; ou
dans lequel le polyester comprend 50 à 90 % en moles d'éthylène glycol et 10 à 50 % en moles de 1,4-cyclohexanediméthanol, sur la base du total de résidus de diol dans le polyester ; ou dans lequel le polyester comprend 65 à 75 % en moles d'éthylène glycol et 25 à 35 % en moles de 1,4-cyclohexanediméthanol, sur la base du total de résidus de diol dans le polyester ; ou dans lequel le polyester comprend 60 à 70 % en moles d'éthylène glycol et 20 à 25 % en moles de 1,4-cyclohexanediméthanol, et 10 à 15 % de diéthylène glycol sur la base du total de résidus de diol dans le polyester ; ou
dans lequel le polyester comprend 75 à 93 % en moles d'éthylène glycol et 5 à 15 % en moles de néopentylglycol, et 2 à 10 % de diéthylène glycol sur la base du total de résidus de diol dans le polyester ; ou
dans lequel le polyester comprend 65 à 92 % en moles d'éthylène glycol, 1 à 10 % en moles de 1,4-cyclohexanediméthanol et 5 à 15 % en moles de néopentylglycol, et 2 à 10 % de diéthylène glycol sur la base du total de résidus de diol dans le polyester.

8. Procédé selon la revendication 1, dans lequel le polyester comprend :
(a) un composant diacide comprenant 90 à 100 % en moles d'acide téréphtalique ; et
(b) un composant diol comprenant 65 à 75 % en moles d'éthylène glycol et 25 à 35 % en moles de résidus de 1,4-cyclohexanediméthanol,
dans lequel le composant diacide est sur la base de 100 % en moles du total de résidus de diacide dans le polyester et le composant diol est sur la base de 100 % en moles du total de résidus de diol dans le polyester.

9. Procédé selon la revendication 1, dans lequel le polyester comprend de 50 % en moles à 99,99 % en moles de 1,4-cyclohexanediméthanol, 0,01 % en moles à 50 % en moles d'éthylène glycol et de 70 % en moles à 100 % en moles d'acide téréphtalique, sur la base d'un total de 100 % en moles de résidus d'acide et d'un total de 100 % en moles de résidus de diol ; ou
dans lequel le polyester comprend de 80 % en moles à 99,99 % en moles de 1,4-cyclohexanediméthanol, 0,01 % en moles à 20 % en moles d'éthylène glycol et de 70 % en moles à 100 % en moles d'acide téréphtalique, sur la base d'un total de 100 % en moles de résidus d'acide et d'un total de 100 % en moles de résidus de diol ;
dans lequel le polyester comprend de 90 % en moles à 99,99 % en moles de résidus de 1,4-cyclohexanediméthanol, 0,01 % en moles à 10 % en moles de résidus d'éthylène glycol et de 70 % en moles à 100 % en moles de résidus d'acide téréphtalique, sur la base d'un total de 100 % en moles de résidus d'acide et d'un total de 100 % en moles de résidus de diol ;
dans lequel le polyester comprend de 95 % en moles à 99,99 % en moles de résidus de 1,4-cyclohexanediméthanol, 0,01 % en moles à 10 % en moles de résidus d'éthylène glycol, de 90 % en moles à 100 % en moles de résidus d'acide téréphtalique, et 0,01 à 10 % en moles de résidus d'acide isophtalique, sur la base d'un total de 100 % en moles de résidus d'acide et d'un total de 100 % en moles de résidus de diol ;
dans lequel le polyester comprend de 20 % en moles à moins de 50 % en moles de résidus de 1,4-cyclohexanediméthanol, plus de 50 % en moles à 80 % en moles de résidus d'éthylène glycol et de 70 % en moles à 100 % en moles de résidus d'acide téréphtalique, sur la base d'un total de 100 % en moles de résidus d'acide et d'un total de 100 % en moles de résidus de diol ; ou

10. Procédé selon la revendication 1, dans lequel le polyester comprend
(a) un composant d'acide dicarboxylique comprenant :
(i) environ 70 à environ 100 % en moles de résidus d'acide téréphtalique, et
(ii) environ 0 à environ 30 % en moles de résidus d'acides dicarboxyliques aromatiques et/ou aliphatiques ayant jusqu'à 20 atomes de carbone ; et
(b) un composant glycol comprenant :
(i) environ 0 à environ 40 % en moles de résidus de 2,2-diméthylpropane-1,3-diol (néopentylglycol ou NPG) ;
(ii) environ 0 à environ 100 % en moles de résidus de 1,4-cyclohexanediméthanol (CHDM) ;
(iii) environ 0 à environ 45 % en moles de résidus de 2,2,4,4-tétraméthyl-1,3-cyclobutanediol (TMCD) ;
(iv) environ 0 à environ 40 pour cent en moles de résidus de diéthylène glycol (DEG), formés ou non in situ ;
dans lequel le reste du composant glycol comprend :
(v) des résidus d'éthylène glycol, et
(vi) éventuellement, de 0 à 10 % en moles des résidus d'au moins un autre glycol modificateur ;
dans lequel le pourcentage en moles total du composant acide dicarboxylique est de 100 % en moles, et
dans lequel le pourcentage en moles total du composant glycol est de 100 % en moles.

11. Procédé selon la revendication 1, dans lequel le polyester comprend au moins environ 90 % en moles d'acide téréphtalique et environ 59 à environ 77,5 % en moles d'éthylène glycol, et environ 15 à environ 28 % en moles de 1,4-cyclohexanediméthanol (CHDM), et environ 7,5 à environ 13 % en moles de diéthylène glycol (DEG) ; dans lequel le composant diacide est sur la base de 100 % en moles et le composant diol est sur la base de 100 % en moles.

12. Film rétractable, un film alvéolé, un article moulé, un article thermoformable, un film ou une feuille extrudé(e), un film soufflé, un article moulé par extrusion-soufflage comprenant le polyester produit par le procédé selon la revendication 1, dans lequel le polyester comprend un catalyseur de polycondensation.

13. Méthode d'introduction ou d'établissement d'un contenu recyclé dans un polyester :
a. l'obtention d'une allocation ou d'un crédit de monomère recyclé pour au moins un monomère recyclé comprenant du TPA, de l'EG, du DMT, du CHDM, du NPG, du TMCD ou du DEG.
b. la conversion des monomères recyclés dans un procédé synthétique selon la revendication 1 pour fabriquer un polyester,
c. la désignation d'au moins une partie du polyester comme correspondant à au moins une partie de l'allocation ou du crédit de monomère recyclé, et éventuellement
d. la proposition à la vente ou la vente du polyester comme contenant ou obtenu avec une teneur en monomères recyclés correspondant à cette désignation.

14. Procédé selon l'une quelconque des revendications précédentes, dans lequel la quantité de polyester recyclé ajoutée au procédé est de 5 à 100 % sur la base de la quantité de TPA requise.

15. Procédé selon l'une quelconque des revendications précédentes, dans lequel le procédé comprend en outre l'ajout d'un catalyseur ou d'un additif via l'ajout de polyester recyclé dans lequel le catalyseur ou l'additif est un composant du polyester recyclé ; tel que Sb, Ti, Co, Mn, Li, Al, P.
